# EUROPEAN PATENT APPLICATION

(11) **EP 0 567 687 A1**
(43) Date of publication of application: **03.11.1993**
(21) Application number: 92115938.0
(22) Date of filing: 17.09.1992
(51) Int. Cl.: A63F 9/00

(54) **Card game player**

(30) Priority: 30.04.1992 JP 111855/92
(71) Applicant: EPOCH CO., LTD., Tokyo (JP)
(72) Inventor: Hara, Hiroshi, c/o Epoch Co., Ltd., Tokyo (JP)
(74) Representative: Lehn, Werner, Dipl.-Ing.

(57) **Abstract**

A card game player is provided which decides the content of a game according to data that is obtained by a bar code and which makes the content of the game visible and audible, thereby appealing visually and audibly and improving in forcefulness, reality, and unexpectedness of development of the game. A bar code reading and operating means 10 which reads out a bar code 1a of a card 1 and which converts data that is obtained by reading out the bar code 1a into another piece of information is connected with a game apparatus 12 on which specialized software for game 14 is mounted which decides the content of the game according to the information, the game apparatus 12 being connected with an image and voice generating means 13 which makes the content of the game visible and audible.

## Description

### BACKGROUND OF THE INVENTION

### [FIELD OF THE INVENTION]

The present invention relates to a card game player, and more particularly, to a card game player which decides the content of the game and which visualizes the content of the game according to data that is read out from a bar code.

### [DESCRIPTION OF THE PRIOR ART]

Conventionally, there is a game in which victory or defeat is decided by matching cards against each other in which cards characters of popular comics, letters, symbols, etc. that give personality and force to the cards are entered.

And, recently, a card game player has been introduced in which victory or defeat of a game is decided by means of matching cards against each other according to data that are obtained by reading out bar codes of the cards in which bar codes necessary data are included and by means of displaying the result of the match of the cards on a display after converting the result of the match of the cards into numerals so that a person who plays the game may see the numerals, for example, the one which is disclosed in Japanese Laid-Open No. Hei 3-193074. With this card game player, as bar codes that are attached to all kinds of goods are available, the number of cards in one's posession is easily increased, thereby variety is given to the development of a game. Further, as the force or the characteristics of a card can not be known just by looking at the bar code of the card, a person additionally enjoys looking for a card with a forceful bar code, and at the same time, the result of a game can not be expected, which doubles the fun of the game. In addition, as victory or defeat between cards is decided by operation of a computer, there are many advantages, for example, offence and defense are done with a quick tempo, the match is tense, the judge of victory or defeat is done impartially.

However, in the card game player which is published in the aforementioned Japanese Laid-Open No. Hei 3-193074, as only numerals are displayed on a display and a scene of an actual fight between characters etc. which are entered in cards can not be visualized, there is a problem that the concrete content of a fight can be known only by imagination. Furthermore, as only a monotonous melody goes around when a game starts, a bar code is inputted, the result of a match is displayed on a display, etc., there is a problem that sound effects enough for putting enthusiasm into the content of a game can not be expected.

### SUMMARY OF THE INVENTION

In order to solve the above problem, the object of the present invention is to provide a card game player in which the content of a game is decided according to data which are obtained by bar codes and the content of a game is made visible and audible, thereby appealing visually and audibly and which improves the forcefulness, reality, and unexpectedness of the development of the game.

In order to attain the above object, according to the presnt invention, a card game player is provided characterized in that it comprises bar code reading and operating means which reads out a bar code of a card and which converts the data obtained by reading out the bar code into another piece of information, a game apparatus having a memory for program which decides the content of a game according to the information, and image and voice generating means which makes the content of the game visible and audible.

Further, according to the present invention, a card game player is provided characterized in that it comprises bar code reading means which reads out a bar code of a card, a game apparatus having a memory for program which converts the data obtained by reading out the bar code into another piece of information and which decides the content of a game according to the information, and image and voice generating means which makes the content of the game visible and audible.

According to Claim 1 of the present invention, as the content of a game is decided according to the information which is obtained by the bar code reading and operating means and the content of the game is made visible and audible, the content of the game always appeals to a person who plays the game visually and audibly and forcefulness and reality can be obtained. As characters and ability, life force, weapons, background, situation, etc. of the characters which are set up and made visible and audible change one by one according to the information, unexpected development of a game is always obtained, which doubles the fun of the game. Moreover, as bar codes that are attached to all kinds of goods are available, a person who plays the game can enjoy looking for advantageous cads and can enjoy seeing and hearing the content of cards which are discovered by the person.

According to Claim 2 of the present invention, by means of converting data which is obtained by the bar code reading means into another piece of information and deciding the content of the game according to the information by the game apparatus and by means of making the content of the game visible and audible, in the same way as Claim 1, the content of the game always appeals to a person who plays the game visually and audibly and forcefulness, reality, unexpected development of the game, etc. are obtained, which doubles the fun of the game.

### BRIEF DESCRIPTION OF THE DRAWINGS

Fig. 1 is a block diagram of a card game player as Embodiment 1 of the present invention;
Fig. 2 is a perspective view of the bar code reading and operating means which is shown in Fig. 1;
Fig. 3 is a block diagram which shows a construction of the card game player as Embodiment 1;
Fig. 4 is a flow chart which shows a way to play with the card game player as Embodiment 1;
Fig. 5 is a block diagram of a card game player as Embodiment 2 of the present invention; and
Fig. 6 is a block diagram which shows a construction of the card game player as Embodiment 2.

### DETAILED DESCRIPTION OF THE PREFERRED EMBODIMENT

Preferred embodiments of the present invention are described in the following with reference to the drawings.

### (Embodiment 1)

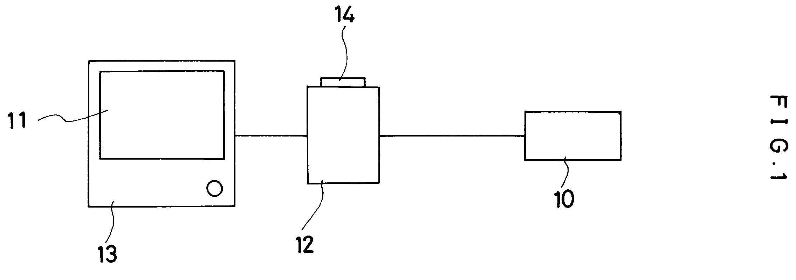

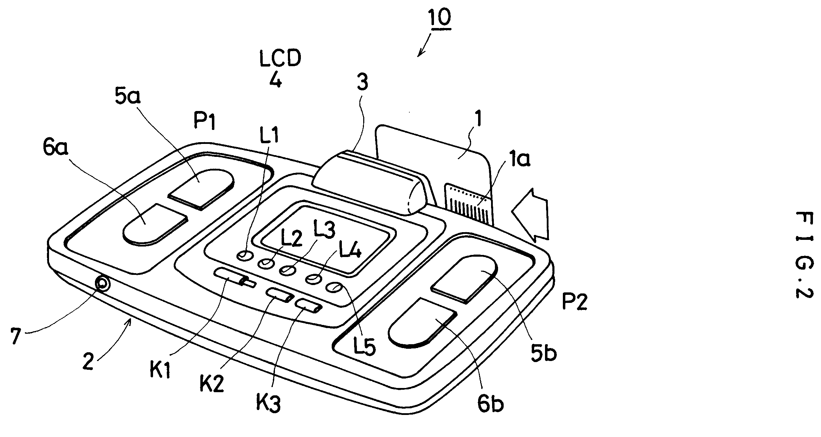

Fig. 1 is a block diagram of a card game player as Embodiment 1 of the present invention. Fig. 2 is a perspective view of the bar code reading and operating means which is shown in Fig. 1.

As shown in Figs. 1 and 2, a card game player of the present invention comprises a bar code reading and operating means 10 which reads out a bar code 1a of a card 1 in which card 1 necessary data are shown as a bar code and which converts data which are read out into another piece of information, a game apparatus 12 which is connected with the bar code reading and operating means 10 having a memory for program which decides the content of a game according to the information, and an image and voice generating means 13 which is connected with the game apparatus 12 and which makes the content of the game visible and audible.

In Embodiment 1, the card game player which is published in the abovementioned Japanese Laid-Open No. Hei P3-193074, a super family computer on the market, and a domestic television set are used as an example of the bar code reading and operating means 10, the game apparatus 12, and the image and voice generating means 13, respectively.

In the bar code reading and operating means 10, a bar code reading means 3 is provided on the upper (farther) edge (or the lower (nearer) edge) of a body 2. The bar code reading means 3, with, for example, an infrared ray photo sensor, reads out the bar code 1a by making the card 1 pass through the bar code reading means 3 in a desired direction, for example in the direction shown by an arrow in Fig. 2. A liquid crystal display (LCD) 4 as a victory or defeat display means is provided virtually in the middle of the body 2.

A battle key 5a and a power up key 6a are provided on the left side P1 of the liquid crystal display 4 and a battle key 5b and a power up key 6b are provided on the right side P2 of the liquid crystal display 4.

Small lamps (LEDs) L₁-L₅ which show indication of offense or defense, display of battle, etc. are arranged on the lower (nearer) edge of the display 4. A power supply switch K₁, a select key K₂, a set key K₃ are arranged under the small lamps L₁-L₅.

Further, operating means which is not shown and which operates the data obtained from the bar code 1a using a predetermined calculation expression is provided in the body 2.

Besides, a jack 7 in which a terminal is inserted is provided on the front side of the body 2. The terminal is to connect the bar code reading and operating means 10 with the game apparatus 12.

A specialized software for game (memory for program) 14 which decides the content of the game according to the information which is transferred from the bar code reading and operating means 10 is mounted on the game apparatus 12.

The image and voice generating means 13 is provided with a display 11 which displays an image, a message, etc.

Next, a concrete operation of the card game player of Embodiment 1 is described in the following.

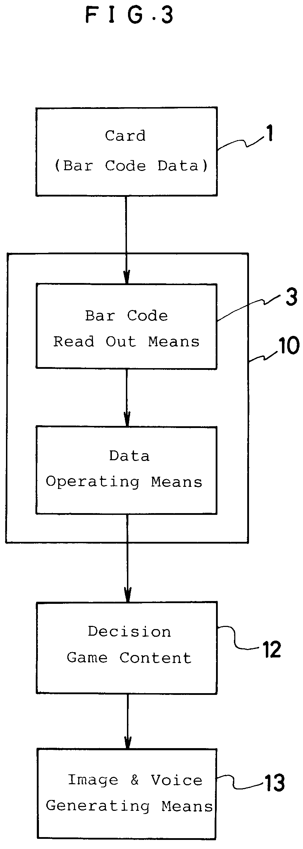

Fig. 3 is a block diagram which shows a construction of a card game player of Embodiment 1.

As shown in Fig. 3, a bar code reading means 3 which reads out the data of the bar code 1a of the card 1 transferres the data to a data operating means. The data operating means receives, operates, and converts the data into another piece of information and transfers the converted information to the game apparatus 12. The game apparatus 12 receives the information and, according to the information, decides the content of the game, that is, the requirements for the progress of the game, for example, setting up of characters, ability, weapons, life force of characters, and background. The game apparatus 12 then transfers the signal to the image and voice generating means 13. The image and voice generating means 13 receives the signal and makes the content of the game visual and audible by converting the signal to an image and voice.

Next, a way of playing with the card game player of Embodiment 1 is described in the following.

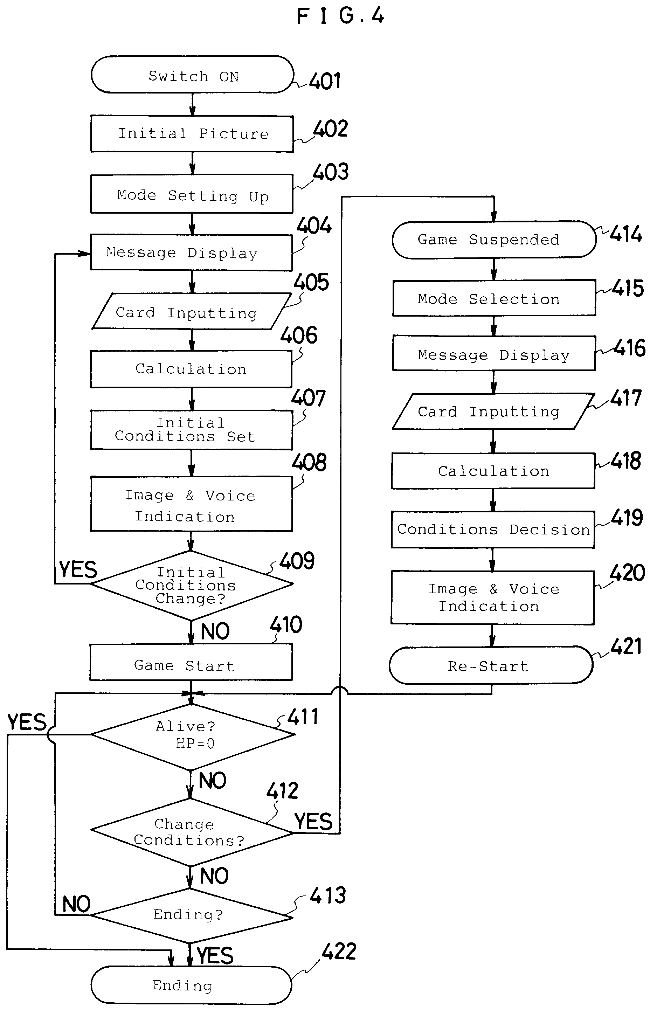

Fig. 4 is a flow chart which shows a way of playing with the card game player of Embodiment 1. In this case, as an example, only one person plays with the card game player, each of the keys provided with the bar code reading and operating means 10 are set up so as to operate according to the content of the specialized software for game, and display 4 displays nothing (because a display 11 displays images).

First of all, power supply switches for the bar code reading and operating means 10, the game apparatus 12, and the image and voice generating means 13 are turned on (step 401). Then, an initial picture is displayed on the display 11 of the image and voice generating means 13 (step 402) and at the same time, music goes around. On the initial picture, indication of setting up the mode, for example, the kind of the game and the number of the players are displayed. According to the indication, the mode is set up by pressing the select key K₂ (step 403). Next, a message which corresponds with the mode which is set up is displayed on the display 11 (step 404). Then, according to the message, data which are in a bar code 1b is inputted from the card 1 (step 405). Here, the card 1 is a card which is indicated by the message among character cards, weapon cards which supplement the ability of a character and improve the offense force of the character, protective equipment cards which improve defense force of a character, item cards which improve life force of a character, etc. The kind or the number of the card(s) 1 depends on the content of the specialized software for game 14. In this way, setting up of all conditions (procedures necessary for the progress of a game) can be done by means of input by cards, and therefore, the game can progress easily.

Next, operation is conducted using the data inputted by the card 1. After converting the data into another piece of information (step 406), according to the information, initial conditions such as the characters are set up (step 407) and the content of the initial conditions is made visual on the display 11 and audible (step 408). At this time, according to the content of the specialized software for game 14, the initial conditions may be selected among characters, weapons, protective equipments, etc. which are in the memory, or, the initial conditions may be made by composing information in the computer in order to make new original characters, weapons, protective equipments, etc.

Next, when a game is started according to the initial conditions, the game is started by pressing the set key K₃ (step 410). When the initial conditions are changed (step 409), the select key K₂ is pressed and the step goes back to step 404 in order to input data by a new card.

After the initial conditions are decided, the game is started (step 410) and the character which is set up according to the initial conditions based upon the content of the specialized software for game 14 begins to act (battle). Here, for example, when an act such as dropping a bomb on an enemy is conducted, the battle key 5a is timely pressed. In case of running away from an enemy, the power up key 6a is pressed. In this way, the game progresses, These are all displayed as images (displayed as an animation) on the display 11 and at the same time, sound effects and melodies are generated.

In the middle of the battle, the computer always judges whether the character is alive or not by computing the damage to the character or to the enemies (step 411) and the game is ended when life value HP = 0 (step 422).

On the other hand, when the conditions are desired to be changed, for example, when a desired weapon or protective equipment is given to the character or the life force of the character is improved (step 412), the select key K₂ is pressed and the game is suspended for a time (step 414). Then, a picture for setting up the mode is displayed on the display 11. According to the picture, the select key K₂ is pressed, and the desired mode is selected (step 415). Next, a message is displayed on the display 11 (step 416). Data of the desired card 1 is inputted according to the message (step 417). After operation is made using the data inputted by the card 1 and the data is converted into another piece of information (step 418), according to the information, the new conditions of the character is decided (step 419). The image of the content of the new conditions of the character is displayed on the display 11 and the content of the new conditions of the character is also made to be audible (step 420). After that, the set key K₃ is pressed and the game is started again (step 421).

When the game is desired to be ended in the middle (step 413), the power supply switch K₁ is pressed and the game is ended (step 422).

In Embodiment 1, the card game player which is published in Japanese Laid-Open No. Hei 3-193074 is used as the bar code reading and operating means 10, but it is apparent that other kinds of bar code reading and operating means may be used with which a bar code is read out and the data obtained by the bar code is processed so as to be converted into another piece of information.

Also, in Embodiment 1, a super family computer on the market is used as the game apparatus 12, but it is apparent that other kinds of television game apparatus such as a personal computer may be used. Further, the bar code reading and operating means 10 may be connected with a small-sized type with specialized software for game installed, such as "Game Boy."

With the card game player of the present invention, if a specialized software for game is prepared, a game can progress by inputting bar codes that are attached to all kinds of goods.

In the present embodiment, only a case in which one person plays a game is described, but it is apparent that a plurality of persons can enjoy a game. Furthermore, by changing the content of the specialized software for game, for example, so that a plurality of cards may be matched against each other, all kinds of game can be enjoyed.

Also, in the present embodiment, the description is based on a role-playing game, but it is apparent that other kinds of games, for example, baseball game, soccer game, and racing game can be enjoyed if a specialized software for game is prepared.

### (Embodiment 2)

Next, Embodiment 2 of the present invention is described in the following with reference to the drawings.

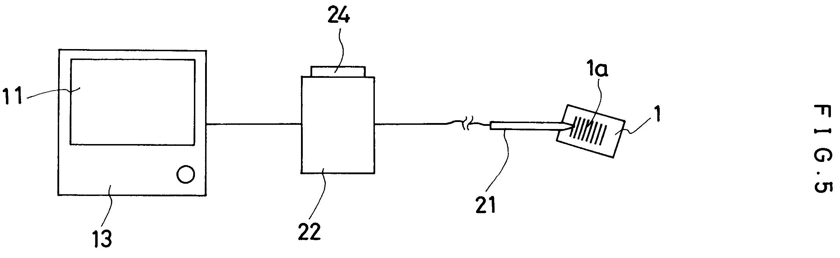

Fig. 5 is a block diagram of a card game player as Embodiment 2 of the present invention. As shown in Fig. 5, the card game player as Embodiment 2 comprises a bar code reading means 21 which reads out a bar code of a card which card includes necessary data, a game apparatus 22 having specialized software for game 24 which converts the data that is read out into another piece of information and which decides the content of a game according to the information, and the image and voice generating means 13 which makes the content of the game visible and audible.

With this card game player, data which are transferred from the bar code reading means 21 are operated and converted into another piece of information by the specialized software for game 24, and the content of the game is decided according to the information.

As the bar code reading means 21, the bar code reading and operating means 10 of Embodiment 1 without the operating means can be used. Or, if a switch is provided with the bar code reading and operating means 10 which switch makes the bar code operating means working or not working, by making the bar code operating means not working with the switch, the bar code reading and operating means 10 can be used in Embodiment 2. Further, other kinds of bar code reading means such as a pen-type reader which is generally used can be used if a bar code can be read out by the means.

As the game apparatus 22 and the image and voice generating means 13, the same kind of apparatus such as in Embodiment 1 can be used.

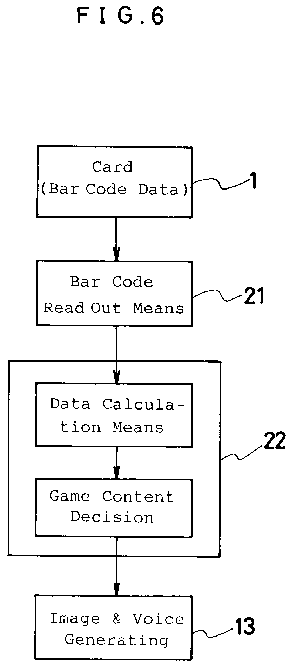

Fig. 6 is a block diagram which shows a construction of the card game player as Embodiment 2.

As shown in Fig. 6, the bar code reading means 21 which reads out the data of the bar code 1a of the card 1 transfers the data to data operating means of the game apparatus 22. The data operating means receives, operates, and converts the data into another piece of information. After that, the data operating means decides the content of the game according to the information, and transfers the signal to the image and voice generating means 13. The image and voice generating means 13 receives the signal and makes the content of the game visible and audible by converting the signal into an image and voice.

With the card game player as Embodiment 2, a game progresses also as shown in the flow chart of Fig. 4.

As described in the above, according to claim 1 of the present invention, the content of a game is decided by information which is obtained by the bar code reading and operating means and, at the same time, the content of the game is made visible and audible. Therefore, the content of the game can always appeal visually and audibly, and the development of the game is unexpected, which doubles the fun of the game. Further, as bar codes that are attached to all kinds of goods are available, a person who plays a game can enjoy looking for cards which are advantageous to the person and can enjoy seeing and hearing the content of the cards which are discovered by the person. Furthermore, as the present invention adopts input by card (input by bar code), the operation of a game apparatus is made easily.

And, according to claim 2 of the present invention, by means of converting data which is obtained by the bar code reading means into another piece of information by the game apparatus, deciding the content of a game according to the information, and making the content of the game visible and audible, in the same way as claim 1 of the present invention, the content of the game can always appeal visually and audibly and forcefulness and reality can be obtained.

## Claims

1. A card game player comprising:
a bar code reading and operating means which reads out a bar code of a card and converts data obtained by reading out the bar code into another piece of information;
a game apparatus having a memory for program which decides the content of a game according to the information; and
an image and voice generating means which makes the content of the game visible and audible.

2. A card game player comprising:
a bar code reading means which reads out a bar code of a card;
a game apparatus having a memory for program which converts data obtained by reading out the bar code into another piece of information and decides the content of a game according to the information; and
an image and voice generating means which makes the content of the game visible and audible.
